(19) Europäisches Patentamt
European Patent Office
Office européen des brevets

(11) **EP 1 960 740 B1**

(12) **EUROPÄISCHE PATENTSCHRIFT**

(45) Veröffentlichungstag und Bekanntmachung des Hinweises auf die Patenterteilung:
**26.06.2013 Patentblatt 2013/26**

(21) Anmeldenummer: **06841429.1**

(22) Anmeldetag: **18.12.2006**

(51) Int Cl.:
***G01D 5/20*** *(2006.01)*

(86) Internationale Anmeldenummer:
**PCT/EP2006/069848**

(87) Internationale Veröffentlichungsnummer:
**WO 2007/068765 (21.06.2007 Gazette 2007/25)**

(54) **INDUKTIVER POSITIONSSENSOR**

INDUCTIVE POSITION SENSOR

CAPTEUR DE POSITION INDUCTIF

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.12.2005 EP 05112329**

(43) Veröffentlichungstag der Anmeldung:
**27.08.2008 Patentblatt 2008/35**

(73) Patentinhaber: **ELMOS Semiconductor AG 44227 Dortmund (DE)**

(72) Erfinder:
• **BUDDE, Dr. Wolfram 46487 Wesel (DE)**

• **KRIBUS, Andreas 44799 Bochum (DE)**
• **BRANDS, Robert 85386 Eching (DE)**

(74) Vertreter: **von Kreisler Selting Werner Deichmannhaus am Dom Bahnhofsvorplatz 1 50667 Köln (DE)**

(56) Entgegenhaltungen:
**GB-A- 2 079 104      US-A- 5 812 598
US-A1- 2002 179 339      US-A1- 2005 030 010**

EP 1 960 740 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft einen induktiven Positionssensor, der insbesondere als Drehwinkelsensor ausgebildet ist. Die Erfindung ist aber auch bei einem Linearpositionssensor einsetzbar.

Auf den verschiedensten technischen Gebieten und für die unterschiedlichsten Anwendungszwecke kann es erforderlich sein, die Position von sich bewegenden Elementen oder Teilen einer Komponente messtechnisch zu erfassen. Als Beispiel für einen Anwendungsfall eines induktiven Drehwinkelsensors sei im Automotive-Bereich die Detektion der Gaspedalstellung, der Drosselklappenstellung oder der Lenkradstellung genannt. Der Vorteil induktiver Sensorsysteme besteht in der berührungslosen Erfassung einer Weg- oder Drehposition.

Die Erfindung betrifft speziell induktive Positionssensoren, wie beispielhaft und schematisch in Figur 1 und z.B. in WO-A-2004/072653 und WO-A-2003/067181 beschrieben. In dieser Figur ist ein Ein-Kanal-Induktiv-Positionssensor als Drehwinkelsensor dargestellt.

Der Sensor 10 weist zwei Sendeeinheiten 12, 14 in Form von Sendespulen auf, von denen jede ein elektromagnetisches Wechselfeld erzeugt, welches eine ortsabhängige Amplitude aufweist. Die beiden Sendeeinheiten 12, 14 werden von einer Ansteuereinheit 16 angesteuert, was weiter unten noch beschrieben werden wird.

Der Sensor 10 ist ferner mit einem beweglichen Element 18 versehen, das in diesem Beispiel als sich drehende Scheibe oder anderweitiges Drehelement ausgebildet ist. Das Element 18 weist einen Schwingkreis 20 aus einer Induktivität 22 und einer Kapazität 24 auf. Das Element 18 bzw. der Schwingkreis 20 dreht sich in einem elektromagnetischen Gesamtwechselfeld, welches aus der Überlagerung der beiden elektromagnetischen Wechselfelder der beiden Sendeeinheiten 12, 14 entsteht. Je nach Drehposition sendet der Schwingkreis 20 ein elektromagnetisches Wechselfeld gleicher Frequenz wie die der Wechselfelder der beiden Sendeeinheiten 12, 14 aus, wobei das vom Schwingkreis 20 ausgesendete Wechselfeld zu den beiden anderen Wechselfeldern phasenverschoben ist. Der Grad der Phasenverschiebung stellt ein Maß für die augenblickliche Drehposition des Elements 18 dar. Das Signal des Schwingkreises 20 wird von einer Empfangseinheit 26 in Form einer Empfängerspule empfangen und in einer Auswerteeinheit 28 wird das empfangene Signal verarbeitet, insbesondere wird die Phasenlage dieses Signals relativ zu den Signalen, mit denen die Sendeeinheiten 12, 14 versorgt werden, bestimmt.

Die Sendespulen bzw. Sendeeinheiten 12, 14 modulieren niederfrequente Schwingungen gleicher Frequenz auf ein für beide Sendespulen identisches Trägersignal auf. Die modulierten Schwingungen der beiden Sendespulen sind um 90° zueinander phasenverschoben. Beide Sendesignale regen den LC-Schwingkreis 20 an. Die Stärke der Anregung ist proportional zur gekoppelten Induktivität zwischen den jeweiligen Sendespulen und der Schwingkreisspule (Induktivität 22). Je nach Position des beweglichen Elements 18 koppelt jedes Sendesignal unterschiedlich stark in den Schwingkreis 20 ein. Im Schwingkreis 20 entsteht eine modulierte Schwingung, die frequenzgleich zum gesendeten Modulationssignal ist. Die modulierte Schwingung des Schwingkreises 20 hat eine Phasenverschiebung relativ zur gesendeten Modulation, die von dem Amplitudenverhältnis der in den Schwingkreis 20 eingekoppelten Modulationssignale der Sendespulen ist. Das im Schwingkreis 20 entstandene Signal wird, wie oben bereits erwähnt, an die Empfangsspule (Empfängereinheit 26) weitergesendet.

Der mathematische Ansatz, der dem Messprinzip zugrunde liegt, stellt sich wie folgt dar. Bei der Addition zweier sinusförmiger Schwingungen gleicher Frequenz, die 90° zueinander phasenverschoben sind, entsteht eine sinusförmige Schwingung gleicher Frequenz. Die Phasenverschiebung der entstehenden Schwingung ist eine Funktion des Amplitudenverhältnisses der beiden addierten Schwingungen.

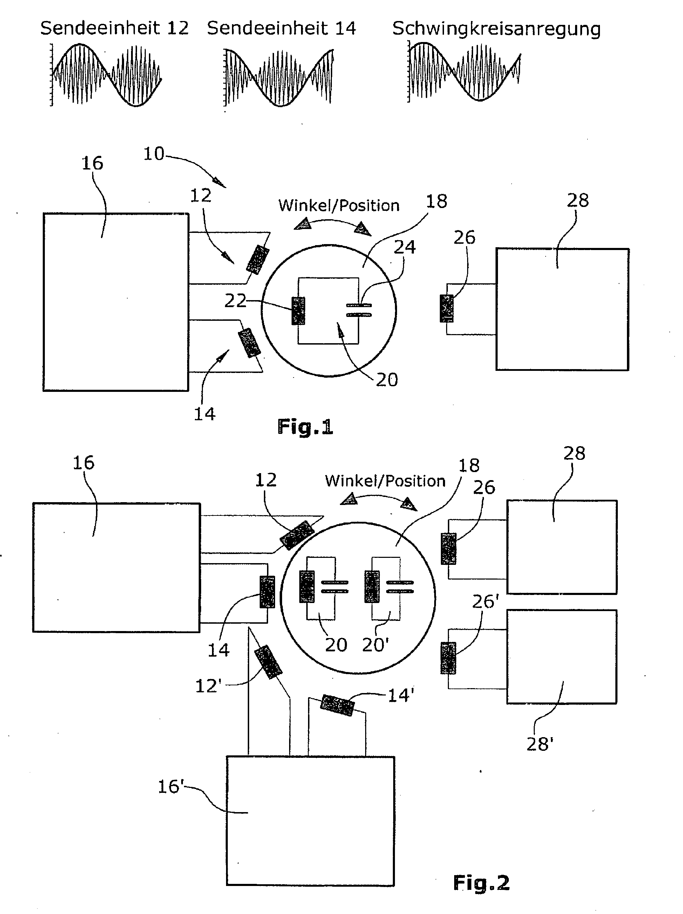

Für viele Anwendungen ist ein zweikanaliger induktiver Positionssensor erforderlich. Dabei ist die in Figur 1 dargestellte Sensoranordnung doppelt vorhanden. Es liegt keine Trennung der beiden Sensoranordnungen vor; beide Kanäle koppeln ineinander über. Ein derartiger Zweikanal-Induktiv-Sensor ist beispielhaft in Figur 2 gezeigt. Ein weiterer Zweikanal-Induktiv-Sensor ist z. B. in US-A-2002/0179339 beschrieben.

Die bekannten induktiven Sensoren der zuvor genannten Bauart haben sich in der Praxis grundsätzlich bewährt. Allerdings ist die Stromaufnahme derartiger Sensoren mitunter für einige Anwendungen zu hoch. Außerdem muss, da eingangsseitig nicht mit Sinus- bzw. Kosinussignalen gearbeitet wird, was für die effektive Nutzung des Systems von Vorteil ist, ausgangsseitig ein recht hoher Signalnachbearbeitungsaufwand in Form von Filterungen und dergleichen betrieben werden, was ebenfalls nicht wünschenswert ist und den Flächenbedarf auf einem ASIC erhöht.

Aus US-A-2005/0030010 ist ein induktiver Positionssensor der oben genannten und beschriebenen Art bekannt, bei dem mit einem PWM-Signal als Modulationssignal gearbeitet wird. Auch hierbei ist ein erhöhter Signalnachbearbeitungsaufwand zu betreiben, was die Gesamtanordnung verkompliziert. Für die Filterung des Modulationssignals zwecks Erhalt des Sinus- bzw. Kosinusverlaufs ist ein Tiefpassfilter mit relativ niedriger Grenzfrequenz erforderlich, was zusätzliche Schaltungskomponenten und damit einen erhöhten Flächenbedarf im ASIC erfordert.

Ein Pulsdichtemodulationssystem ist in GB-A-20791 04 bescrieben, während US-A-5812598 die Verwendung einer Pulsdichte- modulation für die übertragung von Daten offenbart.

Aufgabe der Erfindung ist es, einen induktiven Positionssensor und insbesondere Drehwinkelsensor mit verbesserter Schwingkreisanregung zu schaffen, der verbesserte Funktionseigenschaften aufweist und zuverlässigere Ergebnisse liefert.

Zur Lösung dieser Aufgabe wird mit der Erfindung ein induktiver Positionssensor, insbesondere Drehwinkelsensor, vorgeschlagen, der versehen ist mit den Merkmalen des Anspruchs 1. Einzelne Ausgestaltungen sind Gegenstand der Unteransprüche.

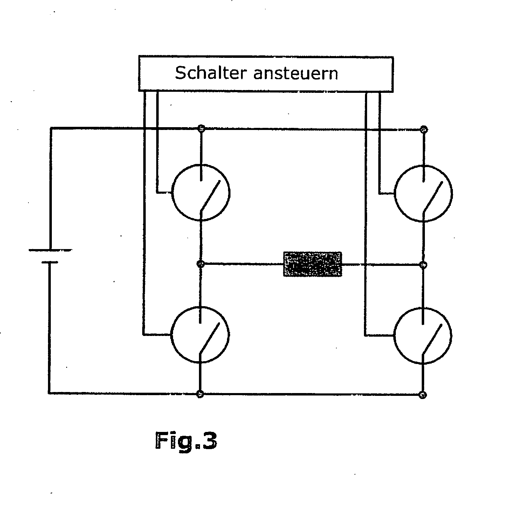

Ausgangspunkt der Erfindung ist der Aufbau eines Ein- bzw. Zweikanal-Sensors, wie er beispielhaft in den Figuren 1 und 2 gezeigt ist. Die Erfindung setzt bei der Erzeugung der Signale für die Sendeeinheiten bzw. -spulen an. Erfindungsgemäß wird das Signal für jede der Sendeeinheiten als Pulsdichtesignal erzeugt, das für bestimmte regelmäßig aufeinander folgende Zeitspannen wechselweise an die Sendeeinheiten geleitet wird. Über eine sogenannte H-Brücke mit elektronischen Schaltern und einer Sendespule im Brückenzweig wird das Rechteckwechselsignal an die Sendespule gelegt (siehe Fig. 3). Derartige Schaltungskonzepte und Ansteuerungen der Schalter mit Pulsdichtesignalen sind grundsätzlich bekannt. Erfindungsgemäß wird das Pulsdichtesignalverfahren zur Erzeugung der gewünschten (idealen oder angenäherten) Sinus-und Kosinussignale für die beiden Sendeeinheiten jedes Kanals eines induktiven Positionsgebers verwendet. Unter "angenähert" im Sinne der Erfindung wird eine Sinus- oder Kosinusform verstanden, die gleich einer Dreieck- oder Trapezfunktion oder einer Treppenfunktion ist oder durch Überlagerungen mehrerer dieser Funktionen nachgebildet ist. Erhalten werden die Pulsdichtesignale z.B. dadurch, dass an den Eingang eines Sigma-Delta-Wandlers oder unter Verwendung eines anderen mathematischen Modells zur Erzeugung eines Pulsdichtesignals das gewünschte Modulationssignal angelegt wird, so dass man am Ausgang das zugehörige Pulsdichtesignal bzw. die zugehörige Dichtefolge von Impulssignalen erhält. Anstelle eines Sigma-Delta-Wandlers bzw. eines anderen Wandlers kann das Pulsdichtesignal auch unter Verwendung einer Simulation des Sigma-Delta-Wandlers, also unter Verwendung eines mathematischen Models dieses Wandlers generiert werden. Das Pulsdichtesignal wird z.B. in einem ASIC abgespeichert.

Bei dem erfindungsgemäß als Modulationssignal verwendeten Pulsdichtesignal handelt es sich um eine Folge von Pulsen gleicher Weite, deren Abstand variabel ist und von der Größe des Signals abhängt. Je größer der augenblickliche Signalwert, d. h. je größer der Funktionswert der Sinus- bzw. Kosinusfunktion ist, desto dichter folgen die Pulse des Pulsdichtesignals aufeinander. Von einem Pulsdichtesignal zu unterscheiden ist ein pulsweitenmoduliertes (PWM)-Signal, bei dem die Anfänge der Pulse gleichweit zeitlich voneinander beabstandet, aber in ihrer Weite variabel sind.

Nach der Erfindung ist vorgesehen, dass zwei erste Sendeeinheiten zwei erste Wechselfelder (elektromagnetische Wechselfelder) mit jeweils einer Trägerfrequenz und einer ortsabhängigen Amplitude erzeugen, wobei beide Wechselfel-der um 90° gegeneinander phasenverschoben sind. Die Trägerfrequenz und die Ortsabhängigkeit der Amplitude beider Wechselfelder ist im wesentlichen gleich. Innerhalb des sich aus der Überlagerung der beiden ersten Wechselfelder ergebenden Gesamtwechselfelds befindet sich ein erster Schwingkreis, der an oder in einem bewegbaren Element (beispielsweise einer rotierenden Scheibe oder dergleichen) angeordnet ist. Der Schwingkreis weist eine Induktivität und eine Kapazität auf. Je nach der Kopplung der Induktivität mit dem Gesamtwechselfeld gibt der Schwingkreis ein Schwingkreis-Wechselfeld aus, dessen Zeitverlauf phasenverschoben zu den beiden ersten Wechselfeldern ist. Anhand dieser Phasenverschiebung kann dann die aktuelle Position des bewegbaren Elements, an bzw. in dem der Schwingkreis angeordnet ist, ermittelt werden.

Das Rechteckwechselsignal liegt vorzugsweise nicht über die gesamte Periode der Trägerfrequenz an den Sendeeinheiten an. Insbesondere ist nach der Erfindung vorgesehen, dass das Rechteckwechselsignal für etwa die Hälfte bis ein Viertel der Periodendauer der Trägerfrequenz an die Sendeinheiten bzw. deren Sendespulen weitergegeben wird. Hierdurch können die Verluste minimiert werden, was insbesondere bei Systemen, bei denen es auf die optimale Nutzung der Energiequellen ankommt, relevant ist. Diese Weiterbildung der Erfindung ist auch bei induktiven Sensorsystemen anwendbar, bei der zur Bildung des Pulsdichtesignals andere Signalformen als Sinus- bzw. Kosinussignale, z.B. Rechtecksignale, zugrunde gelegt sind.

Die Verwendung eines Pulsdichtesignals für das Modulationssignal anstelle des bei induktiven Sensoren an sich bekannten Einsatzes eines PWM-Signals bringt mehrere Vorteile mit sich. So lassen sich die nachzubildenden Signale zur Speisung der Sendeeinheiten mit Hilfe von Pulsdichtesignalen genauer digital generieren. Bei der Tiefpassfilterung müssen lediglich die auf die gegenüber der im Regelfall im MHz-Bereich liegenden Modulationsfrequenz um Größenordnungen größere Wiederholfrequenzen der Pulse herausgefiltert werden, weshalb das Tiefpassfilter nicht so selektiv arbeiten muss und eine relativ hohe Grenzfrequenz, die um Größenordnungen höher ist als die Modulationsfrequenz aufweisen kann. Derartige Filter lassen sich mit vergleichsweise wenigen Filterbauelementen realisieren, so dass in einem ASIC für die Realisierung des Filter auch nur ein geringer Platzbedarf erforderlich ist, Insgesamt ergibt sich mit der Verwendung eines Pulsdichtesignals als Modulationssignal eine einfache digitale Realisierung bei hoher Genauigkeit der Detektion und geringem schaltungstechnischem Aufwand, was insgesamt zu einer kostengünstig herstellbaren Signalverarbeitungsschaltung führt.

In vorteilhafter Weiterbildung der Erfindung ist ferner vorgesehen, dass der induktive Positionssensor über einen zweiten Kanal, also über zwei zweite Sendeeinheiten verfügt, die ihrerseits zwei zweite Wechselfelder mit gleicher Trägerfrequenz und Ortsabhängigkeit ihrer Amplituden erzeugen. Derartige induktive Positionssensoren sind grundsätzlich bekannt. Die Redundanz der Kanäle dient z.B. der erhöhten Betriebssicherheit.

Die Verwendung von Pulsdichtesignalen zur Erzeugung der insbesondere sinus- und kosinusförmig verlaufenden Wechselfelder bringt dann, wenn, wie oben im Rahmen der Erfindung beschrieben, mit verkürzter Pulsbreite gearbeitet wird, das Problem mit sich, dass der eine Kanal bzw. der Schwingkreis des einen Kanals durch das Pulsdichtesignal für die anderen Wechselfelder mit angeregt wird. Die ersten und die zweiten Wechselfelder haben unterschiedliche Trägerfrequenzen. Zur Erzeugung der Wechselfelder mit der niedrigeren Trägerfrequenz werden Rechteckimpulsspannungen verwendet, die über die volle Periodendauer der Trägerfrequenz an den zweiten Sendeeinheiten anliegen. Das Frequenzspektrum dieser Rechteckimpulssignale weist ein Minimum auf, in dem die Trägerfrequenz für die anderen beiden Wechselfelder liegen. Bei der hier beschriebenen Ausgestaltung der Erfindung weisen die beiden ersten Wechselfelder eine höhere Trägerfrequenz als die beiden zweiten Wechselfelder auf. Insbesondere liegt die Trägerfrequenz der ersten beiden Wechselfelder in der Nähe (nämlich ober- oder unterhalb) der zweiten Harmonischen, d. h. des doppelten Wertes der Trägerfrequenz der zweiten Wechselfelder und zwar in einem Bereich, in dem das Frequenzspektrum des Rechteckwechselsignals für die beiden zweiten Sendeeinheiten ein Minimum aufweist.

Die Modulationssignale für die beiden zweiten Sendeeinheiten können gleich den Modulationssignalen für die beiden ersten Sendeeinheiten sein.

Bei dieser Variante des zweikanaligen Positionssensors wird der Schwingkreis mit der niedrigeren Trägerfrequenz mit voller Pulsbreite angeregt, während der andere Schwingkreis, also der Schwingkreis mit der höheren Trägerfrequenz, mit verringerter Pulsbreite, wie oben beschrieben, angeregt wird.

Eine Alternative für die zuvor beschriebene Ansteuerung der beiden Kanäle eines induktiven Positionssensors besteht darin, für den einen Kanal ein Pulsdichtesignal zu verwenden, dessen Frequenzspektrum bei der Frequenz des anderen Kanals ein deutlich ausgeprägtes Minimum bzw. eine Nullstelle aufweist. Derartige Minima bzw. Nullstellen sind vorteilhafterweise auch noch bei anderen Frequenzen ausgebildet, so dass dort die Trägerfrequenzen für weitere Schwingkreise des induktiven Positionssensors (beispielsweise bei drei- oder mehrkanaliger Ausbildung) liegen können.

Die Erfindung betrifft ferner die Verwendung von Pulsdichtesignalen zur Nachbildung der Sinus- und Kosinusfunktion für die Sendeeinheiten eines induktiven Positionssensors, wie in Anspruch 7 angegeben.

Hierbei ist es besonders zweckmäßig, wenn ein Pulsdichtesignal verwendet wird, bei dem die nahen Harmonischen im Bereich von jeweils bis zu 100 kHz ober- und unterhalb der Trägerfrequenz um bis zu mindestens 35 - 40 dB gedämpft sind. Bei einem Zweikanal-Positions-Sensor ist insbesondere von Vorteil, wenn für die ersten Sendeeinheiten ein Pulsdichtesignal verwendet wird, bei dem die nahen Harmonischen von jeweils 0 - 200 kHz ober- und unterhalb der ersten Trägerfrequenz um bis zu 30 dB gedämpft sind und bei dem die Frequenzanteile bei der zweiten Trägerfrequenz und innerhalb eines Bereichs von mindestens +/- 4 % um die zweite Trägerfrequenz herum um mindestens 10 dB gedämpft sind.

Bei der ersten zuvor beschriebenen Alternative des Pulsdichtesignals hat dieses im Frequenzspektrum beidseitig der Trägerfrequenz im Bereich von 0 - 100 kHz eine derart starke Dämpfung, dass auf eine Tiefpassfilterung der der Trägerfrequenz nahen Harmonischen verzichtet werden kann. Durch Wahl des Pulsdichtesignals gemäß der zweiten Alternative ist es möglich, eine Interferenz der beiden Pulsdichtesignale bei den beiden Trägerfrequenzen der belden Kanäle zu unterdrücken, da im Frequenzspektrum des ersten Pulsdichtesignals die Dämpfung der Frequenzanteile um die zweite Trägerfrequenz heran bereits relativ hoch, nämlich mindestens 10 dB ist. Die Dämpfung der nahe der ersten Trägerfrequenz liegenden Harmonischen ist mindestens 30 dB.

Mit der Erfindung ist es möglich, eine sinusförmige Modulation recht genau nachzubilden. Hierbei werden besondere, neu entwickelte Modulationssignale verwendet, die als Bitstring zur Verwendung bei einem Sigma-Delta-Wandler vorgesehen sind.

Die Erfindung wird nachfolgend anhand verschiedener Ausführungsbeispiele und unter Bezugnahme auf die Zeichnung näher erläutert. Im einzelnen zeigen dabei:

Fig. 1    das Grundprinzip eines einkanaligen induktiven Positionssensors,

Fig. 2    das Grundprinzip eines zweikanaligen induktiven Positionssensors,

Fig. 3    ein Schaltungskonzept zur Anregung einer Sendespule in H-Brückenschaltung,

Fig. 4    ein Vergleich der verschiedenen Ansteuerungen für die Trägerfrequenz der Sendespulen,

Fig. 5    graphische Darstellungen diverser Signalzeitverläufe bei der Erzeugung eines Pulsdichtesignals und der Ansteuerung der Sendespule basierend auf den Pulsdichtesignalen,

Fig. 6    eine schematische Darstellung der Einhüllenden des Frequenzspektrums bei der herkömmlichen Rechteckmodulation,

Fig. 7    eine schematische Darstellung der Einhüllenden des Frequenzspektrums für die Verwendung eines Pulsdichtesignals mit verkürzter Pulsbreite,

Fig. 8    eine schematische Darstellung der Einhüllenden des Frequenzspektrums für die Verwendung eines Pulsdichtesignals mit voller Pulsbreite,

Fig. 9.    eine schematische Darstellung der Einhüllenden des Spektrums für die Verwendung eines Pulsdichtesignals mit eingebauten Nullstellen und

Fig. 10-18 Darstellungen von Modulationssignalen nach dem Stand der Technik und nach der Erfindung im Zeit- und Frequenzbereich zur Gegenüberstellung von Erfindung und idealer sinusförmiger Modulation.

Bei den hier beschriebenen Ausführungsbeispielen geht es um die Erzeugung der sinus- und kosinusförmigen amplitudenmodulierten Anregungswechselfelder für mindestens zwei Schwingkreise eines zwei- bzw. mehrkanaligen induktiven Positionssensors, wie er anhand der Fign. 1 und 2 gezeigt ist.

Bei den Ausführungsbeispielen geht es um die Ansteuerung der Sendespulen eines mehrkanaligen induktiven Positionssensors, und zwar sowohl um die Erzeugung des Träger- als auch des Modulationssignals.

Erzeugung der Trägerfrequenz

Um Informationen zu Übertragen, wird einem hochfrequenten Trägersignal im z. B. MHz Bereich ein niederfrequentes Signal im z. B. kHz Bereich, welches die Information enthält, aufmoduliert.

Die Trägerfrequenz wird durch herkömmlicherweises Anlegen einer Rechteck-spannung U an die Sendespule erzeugt. Der Stromfluss $i_L$ durch die Spule folgt dann dem Verlauf einer e-Funktion.

$$i_L = \frac{U}{R} \cdot \left( 1 - e^{\frac{t}{\tau}} \right) \quad \text{mit} \quad \tau = \frac{L}{R}$$

Um $i_L$ verringern zu können, kann die Spannung U über der Spule verringert werden. Für typische Induktivitäten L der Sendespulen gilt jedoch dann weiterhin t > T.

Beispiel:

L=300 nH
R=$_4$ Ohm
Fträger =4 MHz
T=75 ns
T=1/2*T$_{zykTräger}$=125ns

Die in der Empfangsspule induzierte Spannung ist proportional zur Änderung des magnetischen Flusses dΦ/dt. Die Änderung des magnetischen Flusses dΦ/dt ist proportional zu der Änderung des Sendestroms diL/dt. Erreicht der Sendestrom also seinen Endwert $i_L =_{U/R}$, so ist $di_L$/dt=0. Der weiter fließende konstante Strom trägt nicht zu einer Erhöhung des Sendesignals bei.

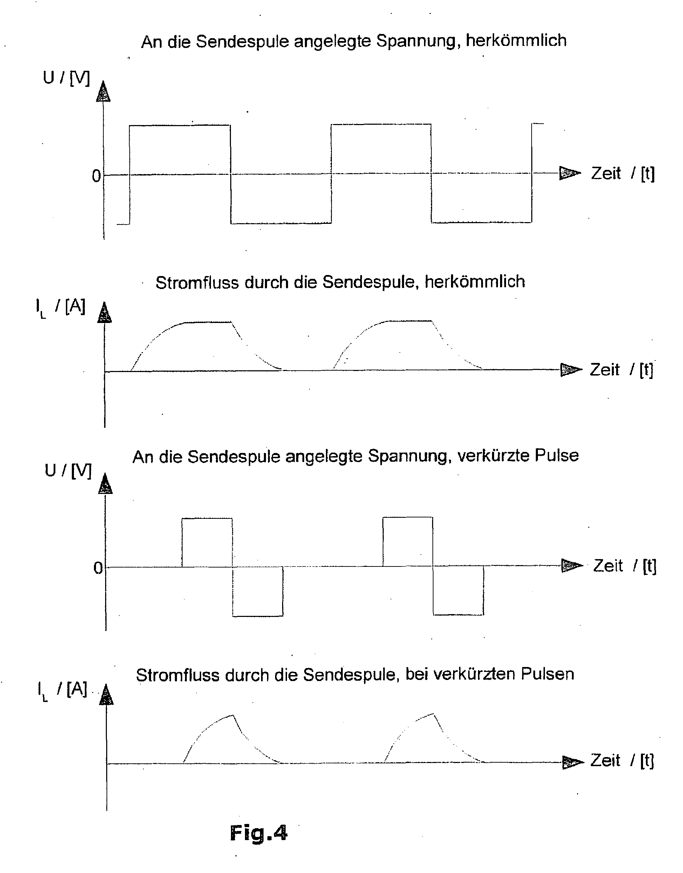

Die Neuerung gemäß einem ersten Ausführungsbeispiel der Erfindung besteht darin, die Breite des Rechteckimpulses der an die Sendespule angelegten Spannung U zu verkleinern. Es fließt also nicht während der gesamten Zykluszeit ein Strom durch die Sendespule. Somit verringert sich der Strom durch die Spule. Auch das Erreichen des Maximalstroms $I_L$=U/R wird vermieden (siehe Fig. 4).

Erzeugung des Modulationssignals (zweites Ausführungsbeispiel)

Induktive Sensoren, bei denen die Winkelstellung oder Linearposition eine Funktion der Phasenverschiebung zwischen gesendetem und empfangenem Modulationssignal ist, erfordern

- konstante Phasendifferenz der Modulationssignale
- gleiche Amplitude der Modulationssignale
- gute Nachbildung des gewünschten Modulationssignals

Der weiter oben vorgestellte mathematische Ansatz für zwei um 90° zueinander verschobene Schwingungen gleicher Frequenz gilt nur für ideale Sinus bzw Kosinus Kurven. In der Praxis werden bisher jedoch zwei um 90° zueinander Verschobene Rechtecksignale benutzt. Dies erfordert im Empfangsteil eine starke Tiefpassfilterung, um aus den Rechtecksignalen die entsprechenden sinusförmigen Signale herauszufiltern. Die Nachteile dabei sind:

- Notwendigkeit von Filtern mit niedriger Frequenz (flächenintensiv)
- Temperaturabhängigkeit der Tiefpassfilterung

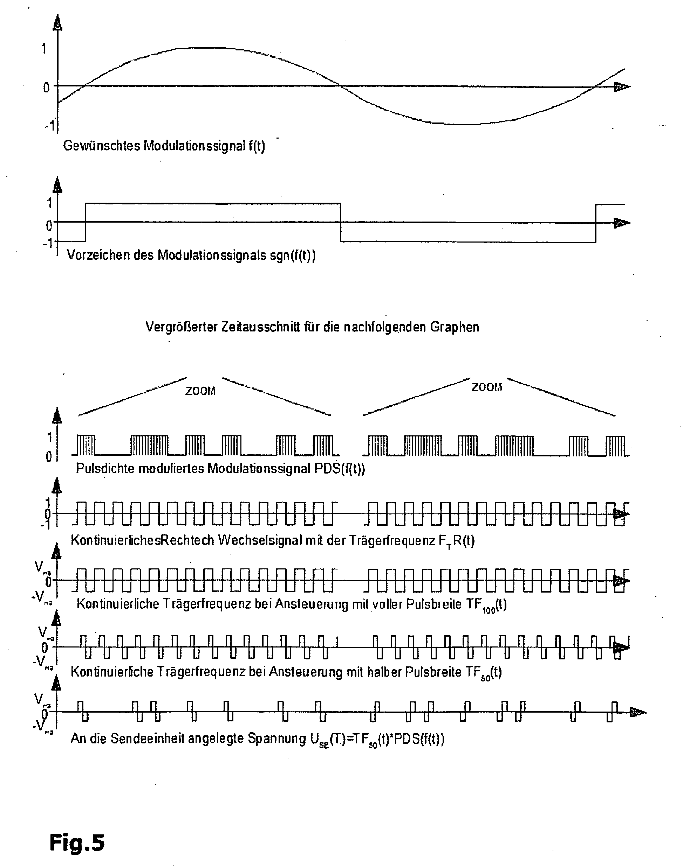

Deutliche Verbesserung entsteht bei der Verwendung eines Pulsdichtesignals, welches das gewünschte Modulationssignal nachbildet. Sehr elegant lässt sich dieses Pulsdichtesignal mit einem mathematischen Modell z.B. eines Sigma-Delta-Wandlers erzeugen. Hierzu legt man an den Eingang dieses Modells das gewunschte Modulationssignal an und erhält am Ausgang das entsprechende Pulsdichtesignal. Dieses Signal kann dann einfach mit wenig Flächenbedarf in Hardware umgesetzt werden. Es ist also nicht notwendig einen Sigma-Delta-Wandler mit im System zu integrieren. Durch die Verwendung eines Pulsdichtesignals, das einer Sinusfunktion entspricht, muss deutlich weniger Tiefpassfilterung stattfinden, da das Pulsdichtesignal den gewünschten Sinusverlauf bereits recht genau beschreibt. Die Verläufe des gewünschten Modulationssignals, dessen Vorzeichenfunktion, des das Modulationssignal repräsentierenden Pulsdichtesignals, der Trägerfrequenz und der Rechteckwechselspannung für die Sendespulen sind in Fig. 5 gezeigt.

Das Pulsdichtesignal hat einen weiteren Vorteil für Systeme, bei denen es darauf ankommt, zwei in einem bestimmten Verhältnis zueinander stehende Modulationssignale, zu erzeugen. Da das Pulsdichtesignal ein reines Digitalsignal ist und im Normalfall die notwendigen Modulationssignale mittels eines gemeinsamen Oszillators erzeugt werden, passen die Modulationssignale sehr gut zueinander, d.h. sie weisen (exakt) die geforderte Phasenverschiebung von 90° auf und sind im Hinblick auf die Amplitude und die Kurvenform gleich.

Wahl der Sendefrequenzen

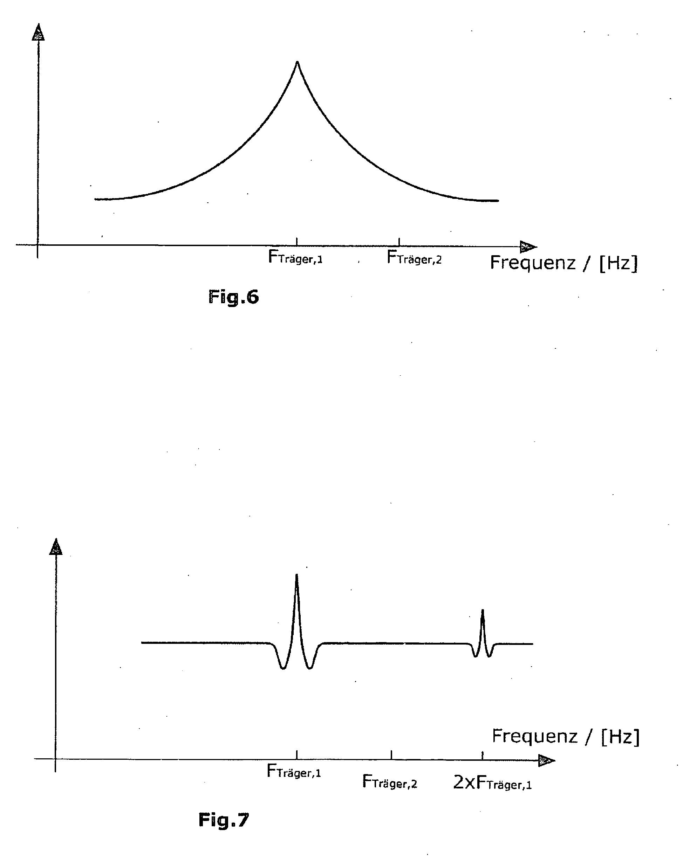

Das vorstehende vorgestellte Pulsdichtesignal hat im Frequenzbereich ein anderes Spektrum als ein Rechtecksignal. Ein Rechtecksignal hat eine deutliche Spitze bei der benutzten Trägerfrequenz und ein stark abfallendes Spektrum sowohl zu höheren als auch zu niedrigeren Frequenzen. Fig. 6 zeigt das Spektrum eines Trägersignals der Frequenz $F_{Träger,1}$, auf das ein Rechtecksignal aufmoduliert wird.

Das Frequenzspektrum eines Pulsdichtesignals hat auch eine Spitze bei der verwendeten Trägerfrequenz, fällt aber zu anderen Frequenzen hin nicht so stark ab. Somit besteht bei Sensoren mit mehreren Kanälen die Gefahr, die zu anderen Kanälen gehörenden Schwingkreise mit anzuregen. Fig. 7 zeigt das Spektrum eines Trägersignals der Frequenz $F_{Träger,1}$, auf das ein Pulsdichtesignal aufmoduliert wird. Dabei wird gleichzeitig die weiter oben vorgestellte Verringerung der Pulsbreite benutzt.

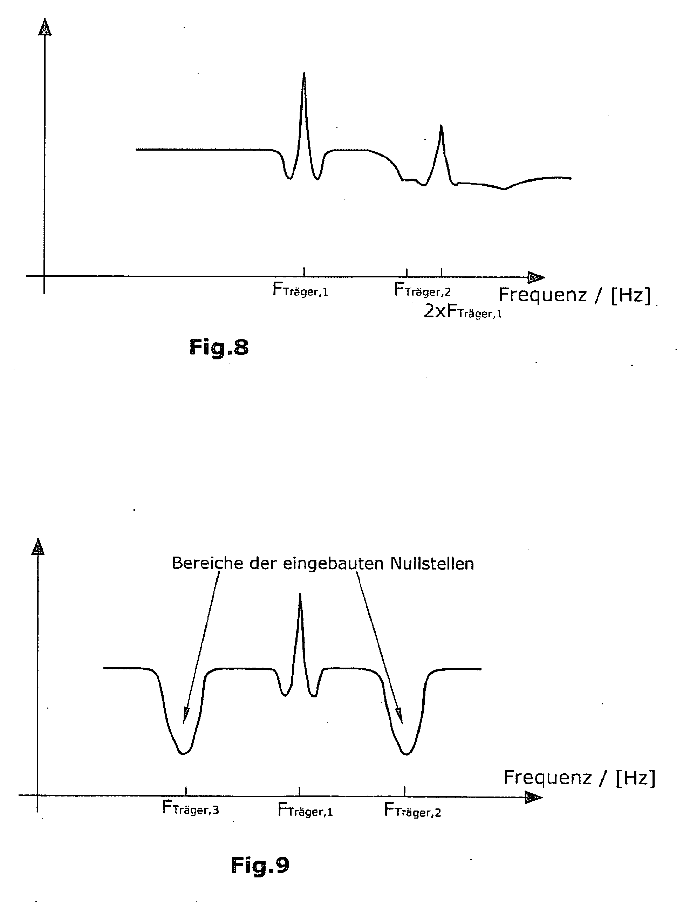

Ohne Verringerung der Pulsbreite (d. h. bei voller Pulsbreite) ändert sich dagegen das Spektrum des Pulsdichtesignals für höhere Frequenzen. Es fällt zu höheren Frequenzen hin ab und erreicht ein erstes Minimum vor der zweiten Harmonischen (zweifache Trägerfrequenz) (siehe Fig. 8).

Um bei Induktiven Sensoren mit mehreren Kanälen die Anregung eines anderen Kanals zu minimieren, ist gemäß diesem Ausführungsbeispiel die Trägerfrequenz des anderen Kanals in das Minimum des Spektrums zu legen. Im weiteren ist für den Kanal mit der niedrigeren Trägerfrequenz die volle Pulsbreite zu Verwenden.

Alternative Erzeugung der Modulationsfrequenz (drittes Ausführungsbeispiel)

Die oben dargestellten Probleme, die bei der Verwendung eines Pulsdichtesignals auftreten, lassen sich durch ein "intelligenteres" Pulsdichtesignal vermeiden. Dabei ist das Pulsdichtesignal so zu wählen, dass dessen Spektrum im Bereich der ein oder mehreren anderen Trägerfrequenzen stark gedämpft wird. Erzeugt man dieses Pulsdichtesignal auch mit einem mathematischen Modell eines Sigma-Delta-Wandlers oder einem anderen, ein Pulsdichtesignal erzeugenden mathematischen Modell, so müssen in dieses Modell zusätzliche Nullstellen in die Übertragungsfunktion eingebaut werden. Fig. 9 zeigt ein mögliches Spektrum für ein moduliertes Pulsdichtesignal mit zusätzlichen eingebauten Nullstellen im Frequenzbereich.

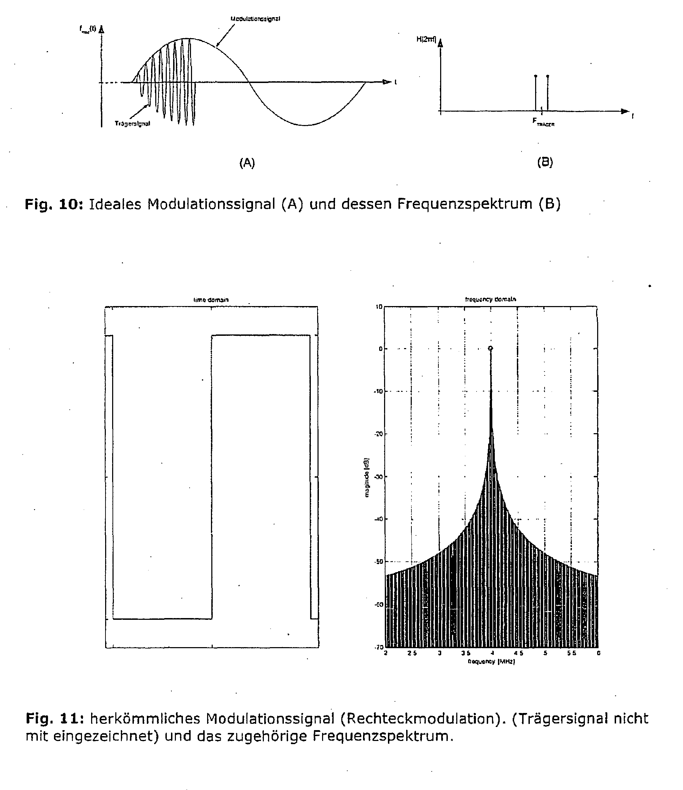

Zur Erläuterung der Neuerung der Erfindung, nämlich der Verwendung von Pulsdichtesignalen als Annäherung einer digital erzeugten sinusförmigen Modulation, sei nachfolgend noch auf die Figuren 10 - 18 verwiesen.

Fig. 10 zeigt das ideale Modulationssignal auf einen idealen Träger moduliert (A) und das zugehörige Frequenzspektrum (B).

Fig. 11 zeigt ein herkömmliches Modulationssignal zur Rechteckmodulation. Das Trägersignal wurde wegen der Übersichtlichkeit nicht mit eingezeichnet. Oft wird das Modulationssignal sogar nur auf eine Halbwelle des Rechtecksignals reduziert.

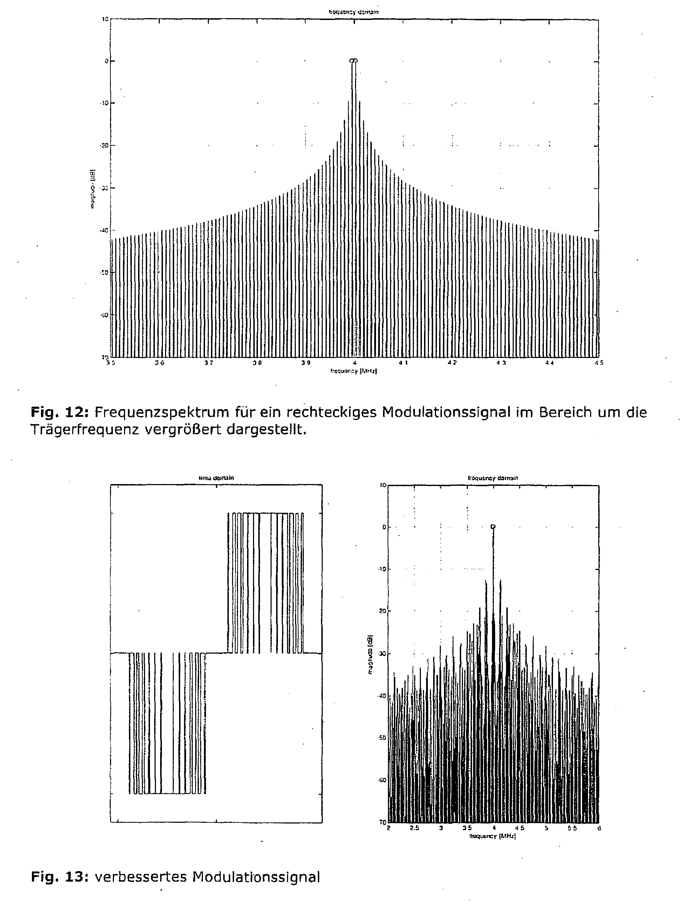

Fig. 12 zeigt das Frequenzspektrum aus Fig. 11 vergrößert. Zu erkennen ist die nur minimale Dämpfung der der Trägerfrequenz nahen Harmonischen.

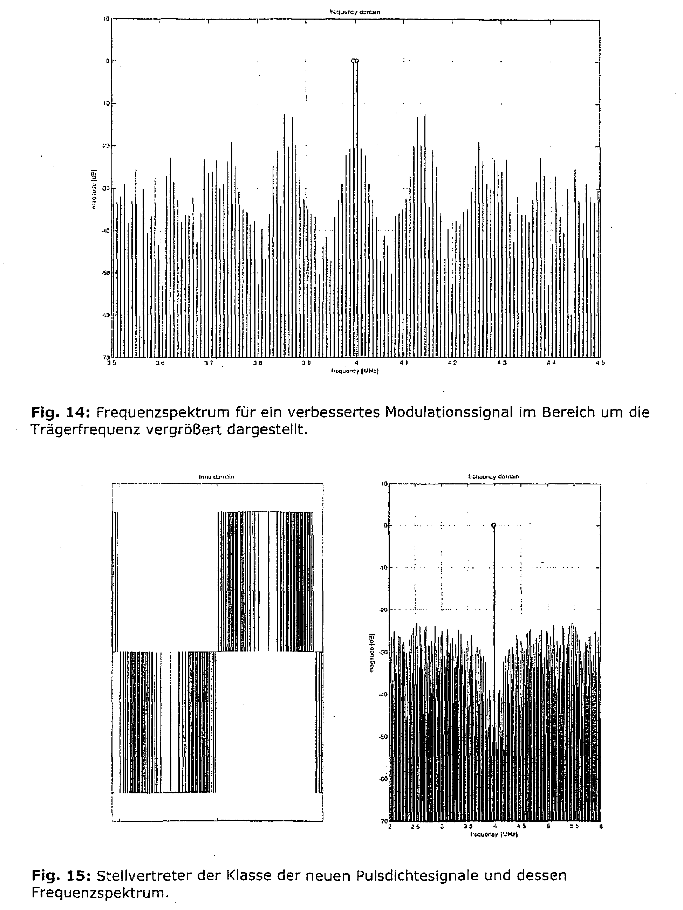

Sowohl bei der Rechteckmodulation (Fign. 11 und 12) als auch bei dem verbesserten Modulationssignal (Fign. 13 und 14) sieht man in der vergrößerten Darstellung des Frequenzbereichs deutlich die Harmonischen des Modulationssignals (Dämpfung ca. 20 dB). Eine intensive Tiefpassfilterung dieser Harmonischen ist notwendig.

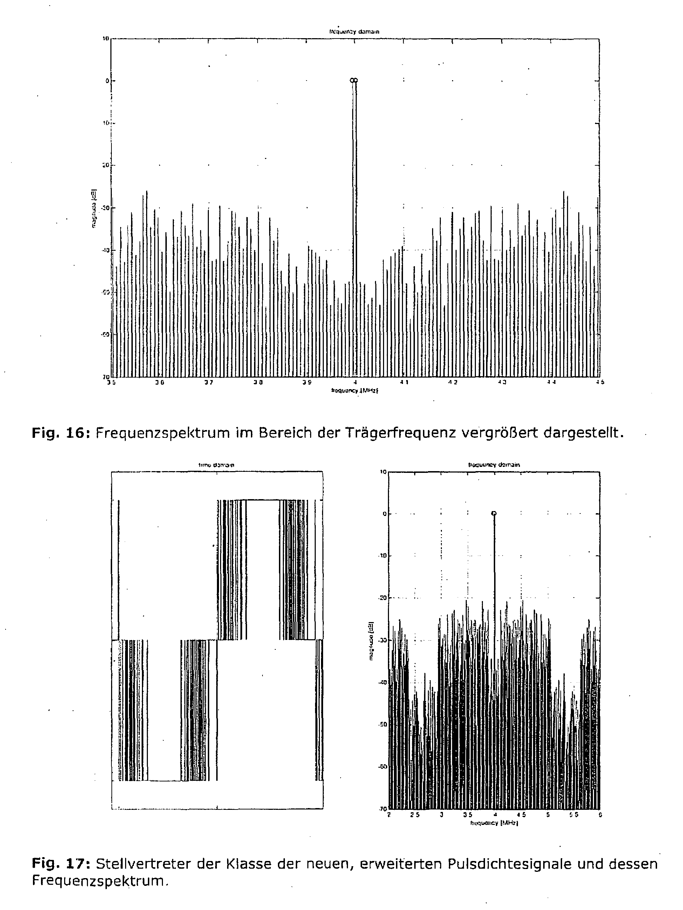

Das neue Pulsdichtesignal zeigt Dämpfungen der Harmonischen (um die Trägerfrequenz von in diesem Ausführungsbeispiel 4 MHz) von ca. 40 dB (siehe Fign. 15 und 16). Eine Tiefpassfilterung der Harmonischen ist nicht notwendig. Den Zeitverlauf dieses Pulsdichtesignals zeigt Fig. 15 (links).

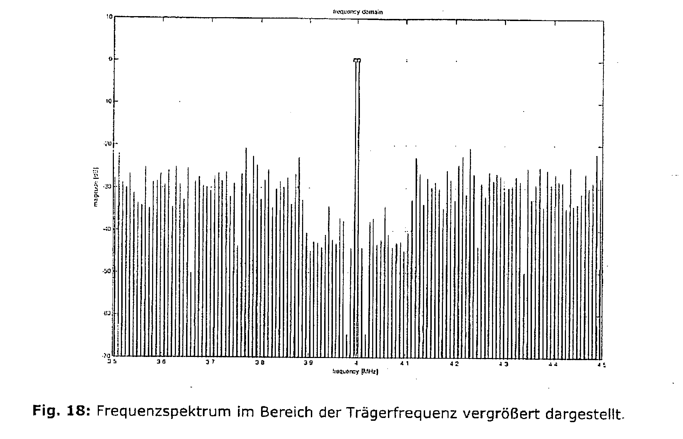

Das neue erweiterte Pulsdichtesignal (siehe Fign. 17 und 18) zeigt zusätzlich ein Minimum im Bereich einer frei wählbaren zweiten Trägerfrequenz (zweiter Kanal). Dieses Minimum liegt mindestens 10 dB unterhalb des angrenzenden Rauschteppichs und hat eine Breite von mindestens +/- 4 % um die zweite Trägerfrequenz, die in diesem Ausführungsbeispiel bei etwa 2,7 MHz liegt, wobei die erste Trägerfrequenz bei 4 MHz liegt.

Zusammengefasst lassen sich die Wesensmerkmale der Erfindung gemäß den zuvor beschriebenen drei Ausführungsbeispielen wie folgt wiedergeben:

- Verkürzte Sendeimpulse zur Erzeugung der Trägerfrequenz, um Strom zu sparen
- Erzeugung eines Modulationssignals durch ein Pulsdichtesignal
- Wahl der Trägerfrequenzen, um parasitäre Effekte durch das Pulsdichtesignal zu dämpfen
- Erzeugung eines Modulationssignals durch ein intelligenteres Pulsdichtesignal das bereits eine Dämpfung der parasitären Effekte enthält

Dadurch hat der induktive Positionssensor folgende Eigenschaften:

- verbesserte Schwingkreisanregung durch die Verwendung eines Pulsdichtesignals für ein sinus- oder kosinusförmiges Signal oder für ein diese Kurvenformen durch ein Dreieck-, Trapez- oder Treppensignal bzw. Überlagerungen mehrerer dieser Signale angenähertes Signal,
- Linearität der Veränderung des Ausgangssignals über der Position des/den Schwingkreis bzw. die Schwingkreise aufweisenden Elements,
- Erzeugung zweier Modulationssignale mit größtmöglich genauer Phasenverschiebung und gleicher Kurvenform für jedes Paar von Sendeeinheiten,
- im wesentlichen temperaturunempfindliches Verhalten des Sensors,
- Integration der Ansteuerung der Sendeeinheiten auf einem Halbleiterchip (ASIC) bei vergleichsweise geringem Flächenbedarf möglich.

**Patentansprüche**

1. Induktiver Positionssensor, insbesondere Drehwinkelsensor, mit

    - zwei ersten Sendeeinheiten zur Erzeugung zweier ortsabhängiger erster Wechselfelder mit gleicher Trägerfrequenz,
    - mindestens einem Schwingkreis, der an oder in einem innerhalb des Gesamtwechselfeldes bewegbaren und bezüglich seiner Position zu bestimmenden Element angeordnet ist,
    - wobei der Schwingkreis von dem Gesamtwechselfeld anregbar ist und ein Schwingkreis-Wechselfeld mit der gleichen Trägerfrequenz wie der der ersten Wechselfelder erzeugt,
    - mindestens einer Empfangseinheit, die das Schwingkreis-Wechselfeld empfängt, und
    - einer Auswerteeinheit zur Ermittlung der Phasenverschiebung zwischen dem Schwingkreis-Wechselfeld und zumindest einem der beiden ersten Wechselfelder,
    - wobei die beiden ersten Wechselfelder jeweils durch ein Trägerfrequenzsignal erzeugbar sind, auf die um im Wesentlichen 90° phasenverschobene, im Wesentlichen gleiche Modulationssignale aufmoduliert sind, und
    - wobei jedes Trägerfrequenzsignal durch Anlegen einer Rechteckwechselspannung für die ersten Sendeeinheiten erzeugbar ist, deren Wiederholfrequenz gleich der Trägerfrequenz ist,

    **dadurch gekennzeichnet,**

    - **dass** das Modulationssignal ein Pulsdichtesignal mit einer sich über die Zeit verändernden Impulsdichte zur Erzeugung eines im Wesentlichen eine Sinus- bzw. Kosinusform aufweisenden Signalverlaufes ist und
    - **dass** die Rechteckwechselspannung jeweils für die Dauer der Pulse des Pulsdichtesignals an den ersten Sendeeinheiten anliegt.

2. Induktiver Positionssensor nach Anspruch 1, **dadurch gekennzeichnet, dass** die Rechteckwechselspannung für eine Dauer anliegt, die kleiner als die Periodendauer der Trägerfrequenz ist.

3. Induktiver Positionssensor nach Anspruch 2, **dadurch gekennzeichnet, dass** die Rechteckwechselspannung für eine Dauer anliegt, die gleich der oder größer als die Hälfte der Trägerfrequenz ist.

4. Induktiver Positionssensor nach Anspruch 3, **dadurch gekennzeichnet, dass** die Rechteckwechselspannung für eine Dauer anliegt, die gleich einem oder größer als ein Viertel der Periodendauer der Trägerfrequenz ist.

5. Induktiver Positionssensor nach einem der Ansprüche 1 bis 4, **dadurch gekennzeichnet, dass**

- in oder an dem bewegbaren Element ein zweiter Schwingkreis angeordnet ist,
- zwei zweite Sendeeinheiten zur Erzeugung zweier sich zu einem Gesamtwechselfeld überlagernder ortsabhängiger zweiter Wechselfelder vorgesehen sind, die die gleiche Trägerfrequenz aufweisen, wobei die Trägerfrequenz der zweiten Wechselfelder verschieden ist von der Trägerfrequenz der ersten Wechselfelder und wobei die Trägerfrequenz der ersten Wechselfelder nahe der zweiten Harmonischen, d. h. dem zweifachen Wert der Trägerfrequenz der zweiten Wechselfelder, sowie in einem Bereich liegt, in dem das Frequenzspektrum des Verlaufs der Rechteckwechselspannung für die beiden zweiten Sendeeinheiten ein Minimum aufweist, und
- wobei die zweiten Wechselfelder jeweils durch ein Trägerfrequenzsignal mit gleichen, um 90° phasenverschobenen aufmodulierten Modulationssignalen von den beiden zweiten Sendeeinheiten erzeugbar sind,
- wobei das Modulationssignal ein Pulsdichtesignal mit einer sich über die Zeit verändernden Impulsdichte zur Erzeugung eines im Wesentlichen eine Sinus- bzw. Kosinusform aufweisenden Signalverlaufes ist und
- wobei die Periodendauer der Rechteckwechselspannung für die zweiten Sendeeinheiten gleich der Periodendauer der Trägerfrequenz der zweiten Wechselfelder ist.

6. Induktiver Positionssensor nach einem der Ansprüche 1 bis 4, **dadurch gekennzeichnet, dass**

- in oder an dem bewegbaren Element ein zweiter Schwingkreis angeordnet ist,
- zwei zweite Sendeeinheiten, deren Wechselfelder untereinander die gleiche Trägerfrequenz aufweisen, wobei die Trägerfrequenz der Wechselfelder der zweiten Sendeeinheiten verschieden ist von der Trägerfrequenz der Wechselfelder der ersten Sendeeinheiten,
- wobei die zweiten Wechselfelder jeweils durch Anlegen eines Trägerfrequenzsignals mit gleichen, um 90° phasenverschobenen, aufmodulierten Modulationssignalen an die zweiten Sendeeinheiten erzeugbar sind,
- wobei jedes Modulationssignal ein Pulsdichtesignal mit einer sich über die Zeit verändernden Impulsdichte zur Erzeugung eines im Wesentlichen eine Sinus- bzw. Kosinusform aufweisenden Signalverlaufes ist und
- wobei der Verlauf der Rechteckwechselspannung für die beiden Sendeeinheiten zur Erzeugung der Wechselfelder mit niedrigerer Trägerfrequenz ein Frequenzspektrum aufweist, das bei der höheren der beiden Trägerfrequenzen ein Minimum und insbesondere eine Nullstelle aufweist und der Verlauf der Rechteckwechselspannung für die beiden anderen Sendeeinheiten zur Erzeugung der Wechselfelder mit höherer Trägerfrequenz ein Frequenzspektrum aufweist, das bei der niedrigeren der beiden Trägerfrequenzen ein Minimum und insbesondere eine Nullstelle aufweist.

7. Induktiver Positionssensor nach Anspruch 6, **dadurch gekennzeichnet, dass** für die ersten Sendeeinheiten ein Pulsdichtesignal verwendet wird, bei dem die nahen Harmonischen von jeweils 0 - 200 kHz ober- und unterhalb der ersten Trägerfrequenz um bis zu 30 dB gedämpft sind und bei dem die Frequenzanteile bei der zweiten Trägerfrequenz und innerhalb eines Bereichs von mindestens +/- 4 % um die zweite Trägerfrequenz herum um mindestens 10 dB gedämpft sind.

8. Induktiver Positionssensor nach einem der Ansprüche 1 bis 7, **dadurch gekennzeichnet, dass** ein Pulsdichtesignal verwendet wird, bei dem die nahen Harmonischen im Bereich von jeweils bis zu 100 kHz ober- und unterhalb der Trägerfrequenz um bis zu mindestens 35 bis 40 dB gedämpft sind.

9. Verwendung eines Pulsdichtesignals mit einer sich über die Zeit verändernden Impulsdichte zur Erzeugung eines im wesentlichen eine Sinus- bzw. Kosinusform aufweisenden Signalverlaufes als Modulationssignal bei einem induktiven Positionssensor, insbesondere Drehwinkelsensor, der versehen ist mit

- zwei ersten Sendeeinheiten zur Erzeugung zweier ortsabhängiger erster Wechselfelder mit gleicher Trägerfrequenz,

- mindestens einem Schwingkreis, der an oder in einem innerhalb des Gesamtwechselfeldes bewegbaren und bezüglich seiner Position zu bestimmenden Element angeordnet ist,

- wobei der Schwingkreis von dem Gesamtwechselfeld anregbar ist und ein Schwingkreis-Wechselfeld mit der gleichen Trägerfrequenz wie der der ersten Wechselfelder erzeugt,

- mindestens einer Empfangseinheit, die das Schwingkreis-Wechselfeld empfängt, und

- einer Auswerteeinheit zur Ermittlung der Phasenverschiebung zwischen dem Schwingkreis-Wechselfeld und zumindest einem der beiden ersten Wechselfelder,

- wobei die beiden ersten Wechselfelder jeweils durch ein Trägerfrequenzsignal erzeugbar sind, auf die um im wesentlichen 90° phasenverschobene, im Wesentlichen gleiche Modulationssignale aufmoduliert sind,

- wobei jedes Trägerfrequenzsignal durch Anlegen einer Rechteckwechselspannung für die ersten Sendeeinheiten erzeugbar ist, deren Wiederholfrequenz gleich der Trägerfrequenz ist und

- wobei das Rechteckwechselsignal jeweils für die Dauer der Pulse des Pulsdichtesignals an den ersten Sendeeinheiten anliegt.

## Claims

1. An inductive position sensor, in particular a rotational angle sensor, comprising

- two first transmitter units for the generation of two site-dependent first alternating fields having the same carrier frequency,

- at least one oscillating circuit arranged on or in an element which may be moved within the total alternating field and the position of which is to be determined,

- the oscillating circuit being adapted to be energized by the total alternating field and generating an oscillating-circuit alternating field having the same carrier frequency as that of the first alternating fields,

- at least one receiver unit receiving the oscillating-circuit alternating field, and

- an analysis unit for determining the phase shift between the oscillating-circuit alternating field and at least one of the two first alternating fields,

- the two first alternating fields each being adapted to be generated by a carrier frequency signal on which substantially identical, substantially 90° phase-shifted modulation signals are modulated, and

- each carrier frequency signal being adapted to be generated by application of a square-wave alternating voltage to the first transmitter units, the repetition frequency of said voltage being equal to the carrier frequency,

**characterized in that**

- the modulation signal being a pulse density signal having a pulse density changing over time for generation of a signal development having a substantially sine or cosine wave form, and

- the square-wave alternating voltage is applied to the first transmitter units respectively for the duration of the pulses of the pulse density signal.

2. The inductive position sensor according to claim 1, **characterized in that** said square-wave alternating voltage is applied for a duration shorter than the period duration of the carrier frequency.

3. The inductive position sensor according to claim 2, **characterized in that** said square-wave alternating voltage is applied for a duration equal to or longer than half the carrier frequency.

4. The inductive position sensor according to claim 3, **characterized in that** said square-wave alternating voltage is applied for a duration equal to or longer than a quarter of the period duration of the carrier frequency.

5. The inductive position sensor according to any one of claims 1 to 4, **characterized in that**

- a second oscillating circuit is arranged in or on the movable element,

- two second transmitter units are provided for generating two site-dependent second alternating fields overlapping each other to form a total alternating field and having the same carrier frequency, the carrier frequency of the second alternating fields being different from the carrier frequency of the first alternating fields, and the carrier frequency of the first alternating fields is close to the second harmonic, i.e. close to twice the value of the carrier frequency of the second alternating fields, and is in a range in which the frequency spectrum of the development of the square-wave alternating voltage for the two transmitter units comprises a minimum, and
- the second alternating fields each being adapted to be generated by the two transmitter units by a carrier frequency signal on which the same, 90° phase-shifted modulation signals are modulated,
- the modulation signal being a pulse density signal having a pulse density changing over time for generation of a signal development having a substantially sine or cosine wave form, and
- the period duration of the square-wave alternating voltage for the second transmitter units is equal to the period duration of the carrier frequency of the second alternating fields.

6. The inductive position sensor according to any one of claims 1 to 4, **characterized in that**

- a second oscillating circuit is arranged in or on the movable element,
- two second transmitter units are provided whose alternating fields have the same carrier frequency among each other, the carrier frequency of the alternating fields of the second transmitter units being different from the carrier frequency of the alternating fields of the first transmitter units,
- the second alternating fields each being adapted to be generated by applying to the second transmitter units a carrier frequency signal on which the same, 90° phase-shifted modulation signals are modulated,
- each modulation signal being a pulse density signal having a pulse density changing over time for generation of a signal development having a substantially sine or cosine wave form, and
- the development of the square-wave alternating voltage for the two transmitter units for generating the alternating fields with the lower carrier frequency has a frequency spectrum which at the higher one of the two carrier frequencies comprises a minimum and preferably a zero point, and the development of the square-wave alternating voltage for the two other transmitter units for generating the alternating fields with the higher carrier frequency has a frequency spectrum which at the lower one of the two carrier frequencies comprises a minimum and preferably a zero point.

7. The inductive position sensor according to claim 6, **characterized in that**, for the first transmitter units, a pulse density signal is used in which the near harmonics of respectively 0-200 kHz above and below the first carrier frequency are attenuated by up to 30 dB and in which the frequency portions at the second carrier frequency and within a range of at least +/- 4% around the second carrier frequency are attenuated by at least 10 dB.

8. The inductive position sensor according to any one of claims 1 to 7, **characterized in that** a pulse density signal is used in which the near harmonics in the range of respectively up to 100 kHz above and below the carrier frequency are attenuated by at least 35-40 dB.

9. Use of a pulse-density signal having a pulse density changing over time for generation of a signal development having a substantially sine or cosine wave form as a modulation signal in an inductive position sensor, in particular a rotational angle sensor, comprising

- two first transmitter units for the generation of two site-dependent first alternating fields having the same carrier frequency,
- at least one oscillating circuit arranged on or in an element which may be moved within the total alternating field and the position of which is to be determined,
- the oscillating circuit being adapted to be energized by the total alternating field and generating an oscillating-circuit alternating field having the same carrier frequency as that of the first alternating fields,
- at least one receiver unit receiving the oscillating-circuit alternating field, and
- an analysis unit for determining the phase shift between the oscillating-circuit alternating field and at least one of the two first alternating fields,
- the two first alternating fields each being adapted to be generated by a carrier frequency signal on which substantially identical, substantially 90° phase-shifted modulation signals are modulated,
- each carrier frequency signal being adapted to be generated by application of a square-wave alternating voltage to the first transmitter units, the repetition frequency of said voltage being equal to the carrier frequency, and
- the square wave signal being applied to the first transmitter units respectively for the duration of the pulses of the pulse density signal.

**EP 1 960 740 B1**

**Revendications**

1. Capteur de position inductif, en particulier, capteur d'angle de rotation, comprenant

- deux premières unités émettrices pour générer deux premiers champs alternatifs dépendants de l'emplacement, de même fréquence porteuse,
- au moins un circuit oscillant, disposé sur ou dans un élément déplaçable à l'intérieur du champ alternatif global et dont la position est à déterminer,
- le circuit oscillant pouvant être excité par le champ alternatif global et générant un champ alternatif de circuit oscillant ayant la même fréquence porteuse que les premiers champs alternatifs,
- au moins une unité réceptrice qui reçoit le champ alternatif de circuit oscillant, et
- une unité d'évaluation pour déterminer le déphasage entre le champ alternatif de circuit oscillant et au moins l'un des deux premiers champs alternatifs,
- les deux premiers champs alternatifs pouvant être générés chacun par un signal de fréquence porteuse, sur lesquels sont modulés des signaux de modulation sensiblement identiques, déphasés sensiblement de 90°, et
- chaque signal de fréquence porteuse pouvant être généré par application d'une tension alternative rectangulaire pour les premières unités émettrices, dont la fréquence de répétition est égale à la fréquence porteuse,

**caractérisé en ce que**

- le signal de modulation est un signal de densité d'impulsions ayant une densité d'impulsions variant en fonction du temps, pour générer un profil de signal de forme sensiblement sinusoïdale ou cosinusoïdale, et

**en ce que** la tension alternative rectangulaire est appliquée respectivement pour la durée des impulsions du signal de densité d'impulsions sur les premières unités émettrices.

2. Capteur de position inductif selon la revendication 1, **caractérisé en ce que** la tension alternative rectangulaire est appliquée pour une durée inférieure à la durée de période de la fréquence porteuse.

3. Capteur de position inductif selon la revendication 2, **caractérisé en ce que** la tension alternative rectangulaire est appliquée pour une durée égale ou supérieure à la moitié de la fréquence porteuse.

4. Capteur de position inductif selon la revendication 3, **caractérisé en ce que** la tension alternative rectangulaire est appliquée pour une durée égale ou supérieure à un quart de la durée de période de la fréquence porteuse.

5. Capteur de position inductif selon l'une des revendications 1 à 4, **caractérisé en ce**

- **qu'**un second circuit oscillant est disposé dans ou sur l'élément déplaçable,
- en ce que sont prévues deux secondes unités émettrices pour générer deux seconds champs alternatifs, dépendants de l'emplacement, superposés en un champ alternatif global et ayant la même fréquence porteuse, la fréquence porteuse des seconds champs alternatifs étant différente de la fréquence porteuse des premiers champs alternatifs et la fréquence porteuse des premiers champs alternatifs étant proche de la seconde harmonique, c.-à-d. égale au double de la valeur de la fréquence porteuse des seconds champs alternatifs, et étant située dans une plage dans laquelle le spectre de fréquences de la courbe de tension alternative rectangulaire pour les deux secondes unités émettrices présente un minimum, et
- les seconds champs alternatifs pouvant être générés chacun par un signal de fréquence porteuse, sur lesquels sont modulés des signaux de modulation identiques, déphasés de 90°, issus des deux secondes unités émettrices,
- le signal de modulation étant un signal de densité d'impulsions ayant une densité d'impulsions variant en fonction du temps, pour générer un profil de signal de forme sensiblement sinusoïdale ou cosinusoïdale, et
- la durée de période de la tension alternative rectangulaire pour les secondes unités émettrices étant égale à la durée de période de la fréquence porteuse des seconds champs alternatifs.

6. Capteur de position inductif selon l'une des revendications 1 à 4, **caractérisé en ce**

- **qu'**un second circuit oscillant est disposé dans ou sur l'élément déplaçable,
- en ce que sont prévues deux secondes unités émettrices dont les champs alternatifs situés l'un en dessous de l'autre ont la même fréquence porteuse, la fréquence porteuse des champs alternatifs des secondes unités

11

émettrices étant différente de la fréquence porteuse des champs alternatifs des premières unités émettrices,
- les seconds champs alternatifs pouvant être générés chacun par application d'un signal de fréquence porteuse, sur lesquels sont modulés des signaux de modulation identiques, déphasés de 90°, aux secondes unités émettrices,
- chaque signal de modulation étant un signal de densité d'impulsions ayant une densité d'impulsions variant en fonction du temps, pour générer un profil de signal de forme sensiblement sinusoïdale ou cosinusoïdale, et
- la courbe de la tension alternative rectangulaire pour les deux unités émettrices pour générer des champs alternatifs de fréquence porteuse plus faible a un spectre de fréquences qui, dans le cas de la plus élevée des deux fréquences porteuses, présente un minimum et, en particulier, un point zéro, et la courbe de la tension alternative rectangulaire pour les deux autres unités émettrices pour générer des champs alternatifs de fréquence porteuse plus élevée a un spectre de fréquences qui, dans le cas de la plus faible des deux fréquences porteuses, présente un minimum et, en particulier, un point zéro.

**7.** Capteur de position inductif selon la revendication 6, **caractérisé en ce qu'**est utilisé, pour les premières unités émettrices, un signal de densité d'impulsions, dans lequel les harmoniques proches dans la plage de respectivement 0 à 200 kHz au-dessus et au-dessous de la première fréquence porteuse sont atténuées de 30 dB maximum et dans lequel les composantes de fréquence, dans le cas de la seconde fréquence porteuse et dans une plage d'au moins +/- 4 % autour de la seconde fréquence porteuse, sont atténuées d'au moins 10 dB.

**8.** Capteur de position inductif selon l'une des revendications 1 à 7, **caractérisé en ce qu'**est utilisé un signal de densité d'impulsions dans lequel les harmoniques proches dans la plage allant respectivement jusqu'à 100 kHz au-dessus et au-dessous de la fréquence porteuse sont atténuées d'au moins 35 à 40 dB.

**9.** Utilisation d'un signal de densité d'impulsions ayant une densité d'impulsions variant en fonction du temps, pour générer un profil de signal, de forme sensiblement sinusoïdale ou cosinusoïdale, en tant que signal de modulation, dans le cas d'un capteur de position inductif, en particulier un capteur d'angle de rotation, lequel est doté de

- deux premières unités émettrices pour générer deux premiers champs alternatifs dépendants de l'emplacement, de même fréquence porteuse,
- au moins un circuit oscillant disposé sur ou dans un élément déplaçable à l'intérieur du champ alternatif global et dont la position est à déterminer ,
- le circuit oscillant pouvant être excité par le champ alternatif global et produisant un champ alternatif de circuit oscillant ayant la même fréquence porteuse que les premiers champs alternatifs,
- au moins une unité réceptrice qui reçoit le champ alternatif de circuit oscillant, et
- une unité d'évaluation pour déterminer le déphasage entre le champ alternatif de circuit oscillant et au moins l'un des deux premiers champs alternatifs,
- les deux premiers champs alternatifs pouvant être générés chacun par un signal de fréquence porteuse, sur lesquels sont modulés des signaux de modulation sensiblement identiques, déphasés sensiblement de 90°, et
- chaque signal de fréquence porteuse pouvant être généré par application d'une tension alternative rectangulaire pour les premières unités émettrices, dont la fréquence de répétition est égale à la fréquence porteuse, et
- le signal alternatif rectangulaire étant appliqué respectivement pour la durée des impulsions du signal de densité d'impulsions sur les premières unités émettrices.

Fig.1

Fig.2

**Fig.3**

An die Sendespule angelegte Spannung, herkömmlich

U / [V]

0 ............................................................ Zeit / [t]

Stromfluss durch die Sendespule, herkömmlich

$I_L$ / [A]

Zeit / [t]

An die Sendespule angelegte Spannung, verkürzte Pulse

U / [V]

0 Zeit / [t]

Stromfluss durch die Sendespule, bei verkürzten Pulsen

$I_L$ / [A]

Zeit / [t]

**Fig.4**

Gewünschtes Modulationssignal f(t)

Vorzeichen des Modulationssignals sgn(f(t))

Vergrößerter Zeitausschnitt für die nachfolgenden Graphen

ZOOM  ZOOM

Pulsdichte moduliertes Modulationssignal PDS(f(t))

Kontinuierliches Rechteck Wechselsignal mit der Trägerfrequenz $F_T R(t)$

Kontinuierliche Trägerfrequenz bei Ansteuerung mit voller Pulsbreite $TF_{100}(t)$

Kontinuierliche Trägerfrequenz bei Ansteuerung mit halber Pulsbreite $TF_{50}(t)$

An die Sendeeinheit angelegte Spannung $U_{SE}(T)=TF_{50}(t){}^*PDS(f(t))$

# Fig.5

16

Fig.6

Fig.7

**Fig.8**

**Fig.9**

(A)                                    (B)

**Fig. 10:** Ideales Modulationssignal (A) und dessen Frequenzspektrum (B)

**Fig. 11:** herkömmliches Modulationssignal (Rechteckmodulation). (Trägersignal nicht mit eingezeichnet) und das zugehörige Frequenzspektrum.

**Fig. 12:** Frequenzspektrum für ein rechteckiges Modulationssignal im Bereich um die Trägerfrequenz vergrößert dargestellt.

**Fig. 13:** verbessertes Modulationssignal

**Fig. 14:** Frequenzspektrum für ein verbessertes Modulationssignal im Bereich um die Trägerfrequenz vergrößert dargestellt.

**Fig. 15:** Stellvertreter der Klasse der neuen Pulsdichtesignale und dessen Frequenzspektrum.

**Fig. 16:** Frequenzspektrum im Bereich der Trägerfrequenz vergrößert dargestellt.

**Fig. 17:** Stellvertreter der Klasse der neuen, erweiterten Pulsdichtesignale und dessen Frequenzspektrum.

**Fig. 18:** Frequenzspektrum im Bereich der Trägerfrequenz vergrößert dargestellt.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004072653 A
- WO 2003067181 A
- US 20020179339 A
- US 20050030010 A
- GB 2079104 A
- US 5812598 A